# EUROPÄISCHE PATENTSCHRIFT

(11) **EP 3 259 614 B1**
(45) Veröffentlichungstag und Bekanntmachung des Hinweises auf die Patenterteilung: **05.05.2021**
(21) Anmeldenummer: 16706134.0
(22) Anmeldetag: 17.02.2016
(51) Int. Cl.: G01S 13/931, G01S 13/87

(54) **VERFAHREN ZUR ERMITTLUNG EINER ORTSINFORMATION EINES KRAFTFAHRZEUGS BEZÜGLICH EINES FAHRKORRIDORS UND KRAFTFAHRZEUG**
METHOD FOR ASCERTAINING A PIECE OF LOCAL INFORMATION FOR A MOTOR VEHICLE IN RELATION TO A DRIVING CORRIDOR, AND MOTOR VEHICLE
PROCÉDÉ PERMETTANT DE DÉTERMINER UNE INFORMATION DE LOCALISATION D'UNE AUTOMOBILE PAR RAPPORT À UN COULOIR DE CIRCULATION ET AUTOMOBILE

(30) Priorität: 18.02.2015 DE 102015002155
(43) Veröffentlichungstag der Anmeldung: 27.12.2017
(73) Patentinhaber: Audi AG, 85045 Ingolstadt (DE)
(72) Erfinder: KHLIFI, Rachid, 85748 Garching (DE)
(86) Internationale Anmeldenummer: PCT/EP2016/000266
(87) Internationale Veröffentlichungsnummer: WO 2016/131541

(56) Entgegenhaltungen:
- EP-A1- 1 873 736
- EP-A1- 2 787 367
- WO-A1-03/093914
- WO-A1-2009/103692
- DE-A1-102007 024 391
- DE-A1-102007 035 219
- US-A1- 2013 218 448
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft ein Verfahren zur Ermittlung einer eine Position und/oder eine Orientierung umfassenden Ortsinformation eines Kraftfahrzeugs bezüglich eines verfügbaren Fahrkorridors in Fahrtrichtung des Kraftfahrzeugs sowie ein Kraftfahrzeug.

In modernen Kraftfahrzeugen realisieren immer mehr Fahrzeugsysteme, insbesondere Fahrassistenzsysteme, Funktionen, in denen eine Erfassung des Umfelds des eigenen Kraftfahrzeugs eine wichtige Rolle spielt. Es werden Umfeldsensoren genutzt, um Sensordaten über die Beschaffenheit des Umfelds des Kraftfahrzeugs zu sammeln und auszuwerten. Die Erfassung dynamischer und statischer, also unbewegter, Ziele im Umfeld des eigenen Kraftfahrzeugs spielt dabei eine besonders wichtige Rolle. Viele Funktionen, insbesondere in Sicherheitssystemen und/oder Fahrerassistenzsystemen, führen eine Fahrsituationsanalyse, also eine Bewertung der Verkehrssituation, durch, wobei Maßnahmenkriterien, die die (gegebenenfalls bereits vorausgewerteten) Sensordaten der Umfeldsensoren auswerten, für durchzuführende Maßnahmen vorgesehen sein können. Beispielsweise können Informationen, insbesondere Warninformationen, an einen Fahrer ausgegeben werden und/oder es können Fahreingriffe durchgeführt werden und/oder Betriebsparameter von Fahrzeugsystemen angepasst werden.

Äußerst wichtig für die nutzerseitige Akzeptanz solcher Fahrzeugsysteme, insbesondere von Sicherheitssystemen und Fahrerassistenzsystemen, ist deren Verlässlichkeit. Das bedeutet, Falsch- oder Fehlwarnungen bzw. allgemein Falsch- oder Fehlmaßnahmen sollen auch in komplexen Verkehrssituationen vermieden werden. Verbesserungsbedarf besteht diesbezüglich insbesondere hinsichtlich der Positionierung des Kraftfahrzeugs hinsichtlich des verfügbaren Fahrkorridors, also des zum weiteren Befahren zur Verfügung stehenden Freiraums. Bekannt ist es in diesem Kontext, die Positionierung des Kraftfahrzeugs relativ zur Fahrbahn bzw. Straße anhand der GPS-Daten eines GPS-Sensors zu bestimmen, was jedoch nur äußerst ungenaue Informationen liefert. Die GPS-Daten liefern zudem keine genauere Information über die relative Orientierung des Kraftfahrzeugs zum Straßenrand bzw. allgemein der Begrenzung des Fahrkorridors. Derartiges ist jedoch, insbesondere auch in Kreuzungssituationen, eine für die Situationsanalyse wichtige Information. Kreuzungen werden zwar als Knotenpunkte in digitalem Kartenmaterial, beispielsweise eines Navigationssystems, auf einer Karte erkannt, jedoch reichen die GPS-Daten nicht aus, um eine genaue Positionierung und Orientierung des Kraftfahrzeugs an einer Kreuzung ermitteln zu können.

WO 03/093 914 A1 betrifft ein Verfahren und eine Vorrichtung zur Kursprädiktion bei Kraftfahrzeugen. Dabei soll ein Ortungssystem für vor dem Fahrzeug befindliche Objekte verwendet werden, bei dem anhand gemessener Abstands- und Winkeldaten für Standziele am Fahrbahnrand eine Funktion berechnet wird, die den Verlauf des Fahrbahnrandes beschreibt, wobei vorgeschlagen wird, für verschiedene Teilmengen der Menge der verfolgten Standziele Fahrbahnrandverläufe abzuschätzen und gegeneinander zu plausibilisieren, um Störobjekte feststellen zu können. Dabei kann ein Radarsensor als Ortungssensor verwendet werden.

US 2013/0 218 448 A1 betrifft eine Straßenform-Abschätzungsvorrichtung. Dort wird vorgeschlagen, bei einer Vielzahl von detektierten Punkten einen Startpunkt zu wählen, der vermutlich einen Bereich der Straße repräsentiert, basierend auf einer Positionsbeziehung zwischen dem Fahrzeug und jedem der Mehrzahl von detektierten Punkten. Auf diese Weise soll eine schnellere Abschätzung des Straßenverlaufs gegeben sein. Verwendet wird eine Radarvorrichtung am vorderen Ende des Kraftfahrzeugs, wobei zunächst detektiert wird, ob sich die detektierten Punkte auf ein stationäres Objekt beziehen.

WO 2009/103 692 A1 betrifft ein Verfahren und ein Assistenzsystem zum Erfassen von Objekten im Umfeld eines Fahrzeugs. Anhand einer Bildauswertung von mittels eines Kamerasensors erfassten Bildern eines Umfelds des Fahrzeugs sollen relevante Objekte bestimmt werden, wobei es die dortige Idee ist, dass mittels eines Radarsensors Positionen von stehenden Objekten im Umfeld des Fahrzeugs ermittelt werden, dass anhand der Positionen der stehenden Objekte ein Verlauf eines Fahrbahnrands ermittelt wird, und dass die Bildauswertung in Abhängigkeit von dem ermittelten Fahrbahnrandverlauf vorgenommen wird.

DE 10 2007 024 391 A1 betrifft ein Kollisionswarngerät mit Leitplankenerkennung, wobei ein Steuergerät Daten des Ortungssystems auswertet und ein Warnsignal bei drohender Kollisionsgefahr ausgibt. Anhand des dynamischen Zustands des Fahrzeugs und anhand des erkannten Leitplankenverlaufs wird ein Parameter für die Querdynamik des Fahrzeugs berechnet, der zur Abwendung einer Kollision mit der Leitplanke erforderlich ist, und gegebenenfalls ein Warnsignal ausgegeben. Die Erkennung der Leitplanken kann mit einem Radarsensor erfolgen, wobei insbesondere das Erkennungsmodul so arbeitet, dass die Warnfunktion auch für Leitplankenabschnitte zur Verfügung steht, deren Radarecho unterhalb der Erkennungsschwelle für Objekte liegt.

EP 1 873 736 A1 betrifft ein Verfahren und ein System zur Unterstützung des Fahrers eines Kraftfahrzeugs bei der Erkennung von Bodenschwellen. Dabei geht es um eine wirkungsvolle Unterstützung des Fahrers bei der Erkennung von Bodenschwellen bzw. Speed-Humps. Ein erfasstes Hindernis wird mittels einer Auswertungseinheit daraufhin bewertet, ob es eine Bodenschwelle ist, wobei eine entsprechende Information an den Fahrer und/oder an Komponenten des Fahrzeugs nur dann ausgegeben wird, wenn ein erfasstes Objekt als Bodenschwelle erkannt worden ist, wobei zusätzlich aktuelle Geschwindigkeiten des Kraftfahrzeugs berücksichtigt werden können.

Der Erfindung liegt daher die Aufgabe zugrunde, ein Verfahren zur genaueren Bestimmung von Ortsinformationen eines Kraftfahrzeugs relativ zu einem Fahrkorridor, insbesondere den Begrenzungen der aktuell befahrenen Fahrbahn, anzugeben.

Zur Lösung dieser Aufgabe sind erfindungsgemäß bei einem Verfahren der eingangs genannten Art die Merkmale des Anspruchs 1 vorgesehen.

Es wird mithin vorgeschlagen, die relative Position und Orientierung des Kraftfahrzeugs zur Begrenzung des Fahrkorridors anhand von Radardaten eines Radarsensors zu erkennen. Dabei wird ausgenutzt, dass moderne Radarsensoren, die bevorzugt in Halbleiter-Technologie, insbesondere CMOS-Technologie, ausgebildet sein können, ein hochauflösendes Abbild des Umfelds des Kraftfahrzeugs liefern. Mit derartigen hochauflösenden Radarsensoren kann die Randbebauung bzw. allgemein der Fahrbahnverlauf sehr gut abgetastet werden, insbesondere, indem eine Umfeldkarte erzeugt wird, in der entsprechende Merkmale eingetragen sind, die Hinweise auf die Begrenzung des Fahrkorridors enthalten. Mit einer derart generierten Umfeldkarte kann die Ortsinformation, insbesondere die Orientierung des eigenen Kraftfahrzeugs zur Begrenzung des Fahrkorridors, ermittelt und Fahrzeugsystemen zur Bewertung zur Verfügung gestellt werden. Die Erfindung stellt also eine hochgenaue Ortsinformation zur Verfügung, die insbesondere bei der Situationsanalyse komplexer Verkehrsszenarien ein Beitrag zur Mehrleistung von Fahrzeugsystemen leistet.

Es wird also ermöglicht, die Positionierung und Orientierung des eigenen Kraftfahrzeugs relativ zum Verlauf des Fahrkorridors, insbesondere zum Fahrbahnverlauf, zur besseren Interpretation der Verkehrssituation zu nutzen, um damit beispielsweise frühzeitig kritische Verkehrssituationen zu erkennen und rechtzeitig Maßnahmen einleiten zu können. Auf diese Weise wird ein Beitrag zur Reduzierung der Falsch- und Fehlauslösungsrate geliefert.

Die Erfindung beruht auf der Erkenntnis, dass es in den Radardaten möglich ist, insbesondere bei hochauflösenden Radardaten, die mit auf Halbleiter-Technologie basierenden Radarsensoren aufgenommen wurden, Merkmale als den Verlauf des Fahrkorridors, insbesondere konkret der Fahrbahn, beschreibend zu klassifizieren, so dass nach deren Identifikation (und damit auch Lokalisierung) ein Verlauf des Fahrkorridors als Fahrkorridorinformation erhalten werden kann, wobei insbesondere vorgesehen sein kann, dass zur Ermittlung der Fahrkorridorinformation wenigstens eine Interpolation und/oder Extrapolation bezüglich der eine Begrenzung des Fahrkorridors anzeigenden Merkmale vorgenommen wird. Sind also beispielsweise in den Merkmalen statische, also unbewegte, Einzelobjekte enthalten, die etwas beabstandet Hinweise auf den Verlauf des Fahrkorridors geben, kann der Verlauf der Begrenzung des Fahrkorridors zwischen diesen Objekten durch Interpolation bestimmt werden, bzw. dann, wenn in einer Richtung kein weiteres Objekt vorliegt, auch extrapoliert werden. Geeignete Ansätze sind im Stand der Technik bekannt, wobei an dieser Stelle allgemein darauf hingewiesen sei, dass ein Fahrkorridor nicht zwangsläufig nur eine einzige Fahrmöglichkeit beschreiben muss, sondern, beispielsweise im Fall von Kreuzungen, auch Verzweigungen aufweisen kann.

Gerade im Hinblick auf die Beurteilung solcher Verzweigungssituationen kann es auch zweckmäßig sein, wenigstens eine aus Sensordaten anderer Sensoren ermittelte und/oder von einem anderen Fahrzeugsystem, insbesondere einem Navigationssystem, zur Verfügung gestellte Zusatzinformationen bei der Ermittlung der Fahrkorridorinformation zu berücksichtigen. Liegt beispielsweise digitales Kartenmaterial vor, das eine Kreuzung an den aktuellen, durch einen GPS-Sensor bestimmten Fahrzeugkoordinaten anzeigt, ist mit Verzweigungen zu rechnen. Doch auch die Sensordaten anderer Sensoren, beispielsweise optischer Umgebungssensoren wie Kameras, können selbstverständlich berücksichtigt werden, wenn es um die Identifikation und Lokalisierung von die Begrenzung des Fahrkorridors beschreibenden Merkmalen und/oder die Ableitung der Fahrkorridorinformation aus diesen geht.

Nichtsdestotrotz ist es auch möglich, ausschließlich aus Radardaten des wenigstens einen Radarsensors eine Fahrkorridorinformation und hieraus die Ortsinformation zu bestimmen, insbesondere dann, wenn tatsächlich in Form von Merkmalen eine Fahrbahnbegrenzung detektiert wird, worauf im Folgenden noch näher eingegangen werden wird.

Eine Weiterbildung der Erfindung sieht vor, dass als Merkmal wenigstens ein aufgrund seiner Höhe und/oder Beschaffenheit durch das Kraftfahrzeug nicht überfahrbares und/oder nicht mit einer einen Schwellwert unterschreitenden Beschädigungswahrscheinlichkeit überfahrbares Merkmal, insbesondere Objekt, identifiziert und lokalisiert wird. Nachdem die Radarsensoren zweckmä-ßigerweise Winkel in zwei zueinander senkrechten Ebenen vermessen, wozu eine diesbezüglich ausgestaltete Antennenanordnung verwendet werden kann, liegen auch Elevationsdaten vor, aus denen die Höhe eines Merkmals, insbesondere Objekts, bestimmt werden kann. Insbesondere werden die Merkmale hinsichtlich ihrer Höhe und hinsichtlich ihrer Ausdehnung gegen ein Überfahrbarkeitskriterium überprüft, welches mithin beispielsweise einen Höhenschwellwert aufweisen kann. Selbstverständlich können jedoch auch genauere Überfahrbarkeitskriterien definiert werden, um ein Objekt als den Fahrkorridor begrenzend zu identifizieren, beispielsweise, indem Subkriterien für die Ausdehnung betrachtet werden, wobei zusätzlich ein Mindestabstand vorgesehen werden kann, das Reflektionsverhalten analysiert werden kann und dergleichen. Selbstverständlich sollte das Merkmal zusätzlich unbewegt sein, um eine tatsächliche, bleibende Fahrkorridorbegrenzung darzustellen, so dass beispielsweise andere Verkehrsteilnehmer als mögliche Fahrkorridorbegrenzungen für diesen Fall außen vor bleiben; diese dynamischen Merkmale, konkret Objekte, sind den Situationsanalysen, die folgen, vorbehalten.

In diesem Zusammenhang kann es zweckmäßig sein, wenn wenigstens ein Überfahrbarkeitskriterium in Abhängigkeit einer aktuellen und/oder für einen Erreichenszeitpunkt vorausberechneten Geschwindigkeit des Kraftfahrzeugs parametriert wird. Bewegt sich das Kraftfahrzeug eher langsam, beispielsweise in einer Rangiergeschwindigkeit, kann mithin der Fahrkorridor anhand bei diesen Geschwindigkeiten beschädigungsfrei überfahrbarer Merkmale erweitert werden, die bei höheren Geschwindigkeiten den Fahrkorridor eingrenzen.

Nachdem letztlich die Identifikation eines Merkmals als eine Begrenzung des Fahrkorridors beschreibend bereits eine Klassifizierung darstellt, kann im Rahmen des erfindungsgemäßen Verfahrens auch eine genauere Klassifizierung wenigstens eines des wenigstens einen Merkmals vorgenommen werden, wobei als Merkmale beispielsweise eine Randbebauung und/oder wenigstens eine Pflanze und/oder wenigstens ein geparktes Kraftfahrzeug und/oder ein Materialübergang klassifiziert werden können. Dies sind auch grundsätzlich zweckmäßig zu betrachtende Merkmale.

Die Erfindung sieht vor, dass als Merkmal eine Fahrbahnbegrenzung der durch das Kraftfahrzeug aktuell befahrenen Fahrbahn und/oder ein die Lage der Fahrbahnbegrenzung anzeigendes Merkmal identifiziert und lokalisiert wird, wobei als Fahrkorridor ein Fahrbahnverlauf ermittelt wird. Gerade unter Verwendung der noch näher zu diskutierenden, auf Halbleiter-Technologien basierenden modernden Radarsensoren kann das Umfeld des Kraftfahrzeugs hinreichend genau aufgelöst werden, um auch die Begrenzung einer aktuell von dem Kraftfahrzeug befahrenen Fahrbahn aufzulösen, wobei insbesondere auch Materialübergänge betrachtet werden können, wenn die aneinander stoßenden Materialen unterschiedliche Reflektionseigenschaften bzw. ein unterschiedliches Reflektionsverhalten aufweisen. Konkret ist vorgesehen, dass als eine Fahrbahnbegrenzung anzeigendes und/oder beschreibendes Merkmal ein Übergang von dem Fahrbahnbelag zu einem anderen Untergrund verwendet wird. Als weitere Merkmale können ein Bordstein und/oder eine Leitplanke verwendet werden. Hierbei handelt es sich um klassische, unmittelbare Fahrbahnbegrenzungen, wobei diese Beispiele selbstverständlich ergänzt werden können, beispielsweise um Leitpfosten und/oder Leitbaken. Dabei sei darauf hingewiesen, dass selbstverständlich auch weitere Merkmale, beispielsweise Pflanzen, insbesondere Bäume, und Bauobjekte Hinweise auf eine grobe Lage der Fahrbahnbegrenzung bieten, die insbesondere dann herangezogen werden können, falls die unmittelbare Fahrbahnbegrenzung, beispielsweise als Übergang von dem Fahrbahnbelag zu einem anderen Untergrund, nicht detektierbar ist.

In besonders zweckmäßiger Weiterbildung kann vorgesehen sein, dass mehrere, insbesondere das gesamte Umfeld des Kraftfahrzeugs in einem 360°-Winkelbereich abdeckende Radarsensoren verwendet werden. Je größer der Anteil des Umfelds des Kraftfahrzeugs ist, der abgedeckt wird, desto mehr grundlegende Informationen stehen zur Verfügung, also in Form von Merkmalen, aus denen die Fahrkorridorinformation abgeleitet werden kann. In einer konkreten Ausgestaltung können beispielsweise acht das gesamte Umfeld des Kraftfahrzeugs in einem 360°-Winkelbereich abdeckende Radarsensoren verwendet werden, wobei beispielsweise jeweils drei insbesondere kleinbauend in Halbleiter-Technologie realisierte Radarsensoren in den vorderen und hinteren Stoßstangen des Kraftfahrzeugs verbaut sind, zwei seitliche Radarsensoren im Bereich der Türen, insbesondere innerhalb der Türen.

Zweckmäßigerweise handelt es sich bei den Radarsensoren um Weitwinkel-Radarsensoren, die eine Winkelauflösung in zwei zueinander senkrechten Ebenen erlauben, mithin eine entsprechend ausgebildete Antennenanordnung aufweisen, um auch Elevationswinkel und somit Höheninformationen liefern zu können.

Wie bereits erwähnt wurde, nutzt die Erfindung in neuerer Zeit entwickelte, hoch moderne Radarsensoren, die die Umgebung hochaufgelöst abtasten können. Die Erfindung sieht mithin vor, dass als der wenigstens eine Radarsensor ein einen den Radartransceiver realisierenden Halbleiterchip, insbesondere CMOS-Chip, umfassender Radarsensor verwendet wird.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Mithin ist es auch im Rahmen der vorliegenden Erfindung besonders zweckmäßig, wenn durch den Halbleiterchip auch eine digitale Signalverarbeitungskomponente des Radarsensors und/oder eine Steuereinheit des Radarsensors realisiert ist und/oder der Halbleiterchip und eine Antennenanordnung des Radarsensors ein Package bilden.

Gerade bei Verwendung solcher auf Halbleiter-Technologie basierender Radarsensoren erschließen sich auch neue Betriebsarten, die die hochauflösende Natur der Radardaten, die von dem wenigstens einen Radarsensor erhalten werden, unterstützen. So sieht eine zweckmäßige Ausgestaltung der vorliegenden Erfindung vor, dass der Radarsensor in einem Frequenzbereich von 77 bis 81 GHz und/oder mit einer Frequenzbandbreite größer als 2 GHz, insbesondere von 4 GHz, betrieben wird. Hohe Frequenzbandbreiten verbessern die Trennung einzelner Reflektionszentren deutlich, so dass sich insbesondere bei einer Frequenzbandbreite von 4 GHz eine hohe Ortsauflösung ergibt, die eine besonders genaue Klassifizierung von Merkmalen als die Begrenzung des Fahrkorridors beschreibend erlaubt.

Wie bereits erwähnt, wird die Ortsinformation bevorzugt im Rahmen wenigstens einer einer Funktion eines Sicherheitssystems und/oder Fahrerassistenzsystems zugeordneten Situationsanalyse berücksichtigt. Diese Situationsanalyse wird durch die nützliche Zusatzinformation verbessert. Dabei sind verschiedene, gegebenenfalls auch kombinierbare Arten denkbar, auf die die Ortsinformation Einfluss auf die Situationsanalyse bzw. zur Realisierung von Funktionen vorgesehene Maßnahmenkriterien haben kann.

So sieht eine konkrete Ausgestaltung der vorliegenden Erfindung vor, dass wenigstens ein in einem Kriterium für eine Informationsausgabe und/oder einen Fahreingriff vorgesehener Schwellwert in Abhängigkeit der Ortsinformation, insbesondere einer Orientierung zu einer Begrenzung des Fahrkorridors, angepasst wird. Ist beispielsweise eine relative Orientierung zur Begrenzung des Fahrkorridors festgestellt worden, die ein baldiges Überfahren desselben andeutet, können Schwellwerte für die Ausgabe von Warninformationen und/oder korrigierende Fahreingriffe herabgesetzt werden.

Denkbar ist es in konkreter Ausgestaltung des Verfahrens zudem, dass im Rahmen der Situationsanalyse ein Schneiden der Begrenzung des Fahrkorridors durch eine zukünftige Trajektorie des Kraftfahrzeugs bewertet wird. Dabei kann es sich insbesondere um eine vorausberechnete Trajektorie, beispielsweise die extrapolierte Momentanbewegung des Kraftfahrzeugs, handeln. Beispielsweise können Schnittpunkte und Schnittwinkel der Trajektorie mit den Begrenzungen des Fahrkorridors betrachtet werden, beispielsweise, um eine Zeit bis zum Schneiden der Begrenzung des Fahrkorridors (Time-to-Intersection) zu bestimmen, welche eine wichtige Information im Rahmen der Fahranalyse darstellt.

Neben den hier genannten Beispielen zur Nutzung der Ortsinformation zur Verbesserung der Situationsanalyse in Fahrzeugsystemen sind selbstverständlich auch andere Möglichkeiten denkbar.

Neben dem Verfahren betrifft die vorliegende Erfindung auch ein Kraftfahrzeug, aufweisend ein zur Durchführung des erfindungsgemäßen Verfahrens ausgebildetes Steuergerät. Dabei kann es sich bei dem Steuergerät insbesondere um ein Steuergerät eines sogenannten zentralen Fahrerassistenzsystems handeln, in dem Sensordaten der Umfeldsensoren und sonstigen Sensoren des Kraftfahrzeugs, insbesondere also auch die Radardaten, entgegengenommen und für Funktionen einzelner Fahrzeugsysteme aufbereitet werden. Ein derartiges Steuergerät kann dann zweckmäßig auch die Ermittlung der Ortsinformation vornehmen, um diese den Funktionen zur verbesserten Fahrsituationsanalyse zur Verfügung zu stellen. Sämtliche Ausführungen bezüglich des erfindungsgemäßen Verfahrens lassen sich analog auf das erfindungsgemäße Kraftfahrzeug übertragen, mit welchem mithin die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: einen in dem Kraftfahrzeug verwendeten Radarsensor,
- Fig. 3: eine erste Verkehrssituation zur Erläuterung des erfindungsgemäßen Verfahrens, und
- Fig. 4: eine zweite Verkehrssituation zur Erläuterung des erfindungsgemäßen Verfahrens.

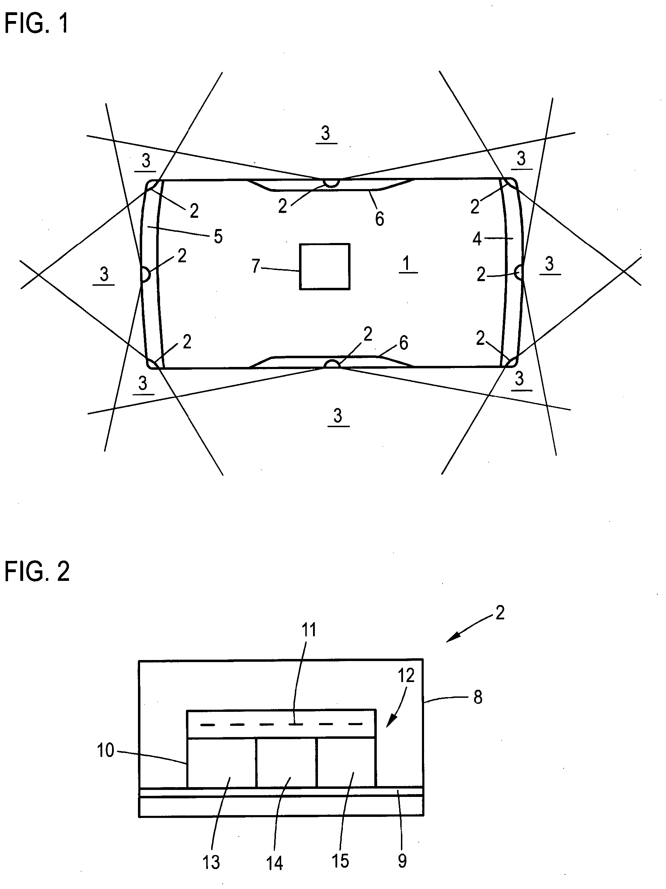

Fig. 1 zeigt eine Prinzipskizze eines erfindungsgemäßen Kraftfahrzeugs 1. Dieses weist vorliegend acht Radarsensoren 2 auf, die als Weitwinkel-Radarsensoren ausgebildet sind und, wie anhand der angedeuteten Erfassungsbereiche 3 ersichtlich ist, eine 360°-Erfassung des Umfelds des Kraftfahrzeugs 1 erlauben. Dabei sind die Radarsensoren 2 basierend auf CMOS-Technologie äußerst kleinbauend realisiert, beispielsweise kleiner als 3 cm mal 3 cm, so dass sie im vorderen bzw. hinteren Stoßfänger 4, 5 des Kraftfahrzeugs 1 verbaut werden können und auch ein Verbau in seitlichen Türen 6 möglich ist, wenn beispielsweise ein radardurchlässiges Fenster im Blech vorgesehen wird.

Die Radardaten der Radarsensoren 2 werden in einem Steuergerät 7 ausgewertet, welches auch zur Durchführung des erfindungsgemäßen Verfahrens ausgebildet ist.

Fig. 2 zeigt in Form einer Prinzipskizze den Aufbau der Radarsensoren 2 genauer. Ein Radarsensor 2 weist ein Gehäuse 8 auf, in dem eine Leiterplatte 9 gehaltert ist, auf der ein Halbleiterchip 10, hier ein CMOS-Chip, angeordnet ist. Der Halbleiterchip 10 ist gemeinsam mit einer Antennenanordnung 11 des Radarsensors 2 als ein Package 12 realisiert, wobei die Antennenanordnung 11 so ausgestaltet ist, dass Winkel zu einem reflektierenden Punkt in zwei zueinander senkrechten Ebenen erfasst werden können.

Durch den Halbleiterchip 10 werden vorliegend neben dem Radartransceiver 13 auch eine digitale Signalverarbeitungskomponente 14 (DSP) und eine Steuereinheit 15 des Radarsensors 2 realisiert.

Die Radarsensoren 2 werden in einem Frequenzbereich von 77 bis 81 GHz bei einer Frequenzbandbreite von 4 GHz betrieben, um hochauflösend das Umfeld des Kraftfahrzeugs 1 beschreibende Radardaten liefern zu können.

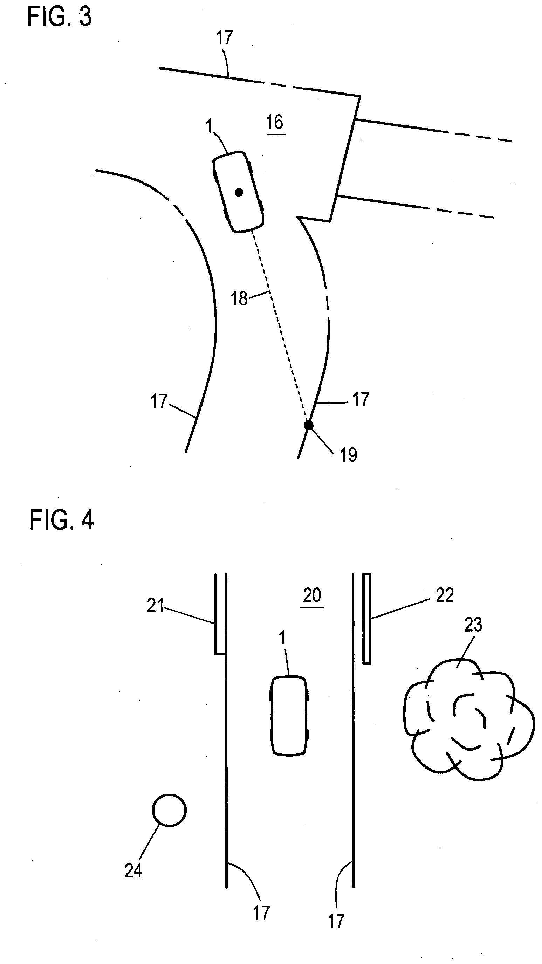

Im Steuergerät 7 werden diese Radardaten nun ausgewertet, um zum einen den Verlauf eines durch das Kraftfahrzeug 1 befahrbaren Fahrkorridors, insbesondere der Fahrbahn, zu bestimmen, zum anderen hieraus eine Ortsinformation abzuleiten, die die relative Position des Kraftfahrzeugs 1 zu diesem Fahrkorridor und insbesondere seinen Begrenzungen angibt. Dabei werden insbesondere in den Radardaten enthaltene Merkmale als die Begrenzung des Fahrerkorridors beschreibend bzw. nicht beschreibend klassifiziert. Selbstverständlich ist auch eine genauere Klassifizierung denkbar. Zur konkreten Erläuterung von Ausführungsformen des erfindungsgemäßen Verfahrens zeigen die Fig. 3 und 4 Fahrsituationen, in denen sich das Kraftfahrzeug befindet.

In Fig. 3 fährt das Kraftfahrzeug 1 gerade eine Straße mit einer Fahrbahn 16 entlang. Die Fahrbahn 16 ist durch einen Übergang 17 zwischen dem Fahrbahnbelag und anderem Untergrund begrenzt. Aufgrund der hochgenauen Radardaten ist es möglich, bei Auswertung des Reflektionsverhaltens der Radarstrahlung, diesen Übergang 17 zumindest abschnittsweise in den Radardaten zu identifizieren und somit zu lokalisieren. Die durchgezogenen Abschnitte des Übergangs 17 deuten dabei in den Radardaten identifizierte und lokalisierte Abschnitte an, während die gestrichelten Teile aus den identifizierten und lokalisierten Teilen bzw. deren Verlauf interpoliert bzw. extrapoliert wurden. Somit ergibt sich ein vollständiges Abbild der Fahrbahn als Fahrkorridor. Selbstverständlich können statt des Übergangs 17 auch andere die Begrenzung der Fahrbahn anzeigende Merkmale betrachtet werden, beispielsweise Bordsteine und dergleichen.

Fig. 3 zeigt auch die Position und Orientierung des Kraftfahrzeugs 1 auf der Fahrbahn 16. Diese Ortsinformation wird insbesondere genutzt, um die Fahrsituationsanalyse in Fahrzeugsystemen des Kraftfahrzeugs zu verbessern, wobei zur genaueren Erläuterung auch eine vorausberechnete zukünftige Trajektorie 18 des Kraftfahrzeugs 1 eingezeichnet ist. Diese schneidet die Begrenzung der Fahrbahn 16, also den Übergang 17, an einem Schnittpunkt 19 in einem größeren Abstand mit einem gewissen Schnittwinkel. Hieraus lässt sich beispielsweise eine Zeit bis zum Schneiden der Fahrbahnbegrenzung ermitteln, die in der Fahrsituationsanalyse eine nützliche Information darstellt, genau wie der Schnittwinkel, insbesondere, was die Ausgabe von Warnungen und/oder das Durchführen von Warneingriffen angeht. Auf diese Weise kann die Ortsinformation auch Einfluss auf Schwellwerte in entsprechenden Maßnahmenkriterien haben.

Der bestimmte Fahrkorridor muss nicht zwangsläufig dem Übergang 17 oder sonstigen Begrenzungen der Fahrspur 16 entsprechen, insbesondere dann, wenn diese tatsächlichen Fahrbahnbegrenzungen nicht hinreichend genau detektiert werden können. In solchen Fällen optional oder in einem anderen Ausführungsbeispiel des erfindungsgemäßen Verfahrens können als Merkmale, die die Begrenzung des Fahrkorridors beschreiben, auch solche herangezogen werden, die durch das Kraftfahrzeug 1 nicht bzw. nicht beschädigungsfrei überfahrbar sind. Dies sei im Hinblick auf Fig. 4 näher erläutert.

Auch dort befindet sich das Kraftfahrzeug 1 auf einer Fahrbahn 20, deren Begrenzung nur im Fall des Bordsteins 21 und der Leitplanke 22 als Merkmale in den Radardaten genauer bestimmt werden kann, während der Übergang 17 vorliegend nicht oder nicht genau in den Radardaten identifiziert und lokalisiert werden kann. Jedoch existieren auch weitere Merkmale in der Umgebung des Kraftfahrzeugs 1, die nicht durch dieses überfahren werden können und mithin einen Hinweis auf die Begrenzung des Fahrkorridors geben, vorliegend beispielhaft ein Baum 23 und ein Randbebauungsobjekt 24, konkret ein Poller. Diese Merkmale, die anhand eines entsprechenden Überfahrbarkeitskriteriums identifiziert werden können, schränken den Fahrkorridor ebenso ein, auch wenn dieser dann nicht unmittelbar dem exakten Verlauf der Fahrbahn 20 entsprechen muss.

Es sei an dieser Stelle noch angemerkt, dass Überfahrbarkeitskriterien zur Identifizierung von den Fahrkorridor begrenzenden Merkmalen auch abhängig von der Geschwindigkeit des Kraftfahrzeugs 1 gewählt werden können. Zudem können bei der Ermittlung der Fahrkorridorinformation auch Zusatzinformationen herangezogen werden, die beispielsweise aus Sensordaten weiterer Umgebungssensoren, digitalem Kartenmaterial und/oder Daten anderer Fahrzeugsysteme abgeleitet werden können.

## Patentansprüche

1. Verfahren zur Ermittlung einer eine Position und/oder eine Orientierung umfassenden Ortsinformation eines Kraftfahrzeugs (1) bezüglich eines verfügbaren Fahrkorridors in Fahrtrichtung des Kraftfahrzeugs (1), wobei die Umgebung des Kraftfahrzeugs (1) beschreibende Radardaten mit wenigstens einem Radarsensor (2) aufgenommen werden, wenigstens ein die Begrenzung des Fahrkorridors beschreibendes, unbewegtes Merkmal in den Radardaten identifiziert und lokalisiert wird und zur Ermittlung einer den Fahrkorridor in einem Fahrzeugkoordinatensystem beschreibenden Fahrkorridorinformation ausgewertet wird, wobei die Ortsinformation aus der Fahrkorridorinformation abgeleitet wird und wobei als Merkmal eine Fahrbahnbegrenzung der durch das Kraftfahrzeug (1) aktuell befahrenen Fahrbahn (16, 20) und/oder ein die Lage der Fahrbahnbegrenzung anzeigendes Merkmal identifiziert und lokalisiert wird, wobei als Fahrkorridor ein Fahrbahnverlauf ermittelt wird, **dadurch gekennzeichnet,**
**dass** als der wenigstens eine Radarsensor (2) ein einen den Radartransceiver (13) realisierenden Halbleiterchip (10), insbesondere CMOS-Chip, umfassender Radarsensor (2) verwendet wird und als eine Fahrbahnbegrenzung anzeigendes und/oder beschreibendes Merkmal ein Materialübergang (17) von dem Fahrbahnbelag zu einem anderen Untergrund verwendet wird, der durch Auswertung des Reflektionsverhaltens der Radarstrahlung identifiziert wird.

2. Verfahren nach Anspruch 1,
**dadurch gekennzeichnet,**
**dass** wenigstens ein des wenigstens einen Merkmals klassifiziert wird.

3. Verfahren nach Anspruch 1 oder 2,
**dadurch gekennzeichnet,**
**dass** als eine Fahrbahnbegrenzung anzeigendes und/oder beschreibendes Merkmal ferner ein Bordstein (21) und/oder eine Leitplanke (22) verwendet werden.

4. Verfahren nach einem der vorangehenden Ansprüche,
**dadurch gekennzeichnet,**
**dass** zur Ermittlung der Fahrkorridorinformation wenigstens eine Interpolation und/oder Extrapolation bezüglich der eine Begrenzung des Fahrkorridors anzeigenden Merkmale vorgenommen wird und/oder wenigstens eine aus Sensordaten anderer Sensoren ermittelte und/oder von einem anderen Fahrzeugsystem, insbesondere einem Navigationssystem, zur Verfügung gestellte Zusatzinformation bei der Ermittlung der Fahrkorridorinformation berücksichtigt wird.

5. Verfahren nach einem der vorangehenden Ansprüche,
**dadurch gekennzeichnet,**
**dass** mehrere, insbesondere das gesamte Umfeld des Kraftfahrzeugs (1) in einem 360°-Winkelbereich abdeckende Radarsensoren (2) verwendet werden.

6. Verfahren nach Anspruch nach einem der vorangehenden Ansprüche,
**dadurch gekennzeichnet,**
**dass** durch den Halbleiterchip (10) auch eine digitale Signalverarbeitungskomponente (14) des Radarsensors (2) und/oder eine Steuereinheit (15) des Radarsensors (2) realisiert ist und/oder der Halbleiterchip (10) und eine Antennenanordnung (11) des Radarsensors (2) ein Package (12) bilden.

7. Verfahren nach einem der vorangehenden Ansprüche,
**dadurch gekennzeichnet,**
**dass** der Radarsensor (2) in einem Frequenzbereich von 77 bis 81 GHz und/oder mit einer Frequenzbandbreite größer als 2 GHz, insbesondere von 4 GHz, betrieben wird.

8. Verfahren nach einem der vorangehenden Ansprüche,
**dadurch gekennzeichnet,**
**dass** die Ortsinformation im Rahmen wenigstens einer einer Funktion eines Sicherheitssystems und/oder Fahrerassistenzsystems zugeordneten Situationsanalyse berücksichtigt wird.

9. Verfahren nach Anspruch 8,
**dadurch gekennzeichnet,**
**dass** wenigstens ein in einem Kriterium für eine Informationsausgabe und/oder einen Fahreingriff vorgesehener Schwellwert in Abhängigkeit der Ortsinformation, insbesondere einer Orientierung zu einer Begrenzung des Fahrkorridors, angepasst wird.

10. Verfahren nach Anspruch 8 oder 9,
**dadurch gekennzeichnet,**
**dass** im Rahmen der Situationsanalyse ein Schneiden der Begrenzung des Fahrkorridors durch eine zukünftige Trajektorie (18) des Kraftfahrzeugs (2) bewertet wird.

11. Kraftfahrzeug (2) mit einem zur Durchführung eines Verfahrens nach einem der vorangehenden Ansprüche ausgebildeten Steuergerät (7).

## Claims

1. Method for determining location information of a motor vehicle (1) comprising a position and/or an orientation relative to an available driving route in travelling direction of the motor vehicle (1), wherein radar data describing the surrounding area of the motor vehicle (1) are captured by at least one radar sensor (2), at least one motionless feature describing the boundary of the driving route is identified and located in the radar data and is evaluated for determining driving route information describing the driving route in a vehicle coordinate system, wherein the location information is derived from the driving route information and wherein as a feature a driving route boundary of the road (16, 20) currently being driven by the motor vehicle (1) and/or a feature displaying the position of the road boundary is identified and located, wherein a course of the road is determined as the driving route,
**characterised in**
**that** a radar sensor (2) is used as the at least one radar sensor (2) which comprises a semiconductor chip (10), in particular a CMOS chip, activating the radar transceiver (13), and as a feature displaying and/or describing a road boundary a material transition (17) from the road surface to another ground surface is used, which is identified by evaluating the reflection behaviour of the radar radiation.

2. Method according to claim 1,
**characterised in**
**that** at least one of the at least one features is classified.

3. Method according to claim 1 or 2,
**characterised in**
**that** a curb (21) and/or a crash barrier (22) are used as a feature displaying and/or describing a road boundary.

4. Method according to any of the preceding claims,
**characterised in**
**that** for determining the driving route information at least one interpolation and/or extrapolation is performed relative to features displaying a boundary of the driving route and/or at least one additional piece of information determined from sensor data from other sensors and/or made available from a different vehicle system, in particular a navigation system, is taken into consideration when determining the driving route information.

5. Method according to any of the preceding claims,
**characterised in**
**that** a plurality of radar sensors (2) are used, which cover in particular the whole surrounding area of the motor vehicle (1) in a 360° angular range.

6. Method according to any of the preceding claims,
**characterised in**
**that** by means of the semiconductor chip (10) also a digital signal processing component (14) of the radar sensor (2) and/or a control unit (15) of the radar sensor (2) is/are activated and/or the semiconductor chip (10) and an antenna arrangement (11) of the radar sensor (2) form a package (12).

7. Method according to any of the preceding claims,
**characterised in**
**that** the radar sensor (2) is operated in a frequency range of 77 to 81 GHz and/or in a frequency bandwidth greater than 2 GHz, in particular 4 GHz.

8. Method according to any of the preceding claims,
**characterised in**
**that** the location information is taken into consideration as part of at least one situation analysis assigned to a function of a safety system and/or driver assistance system.

9. Method according to claim 8,
**characterised in**
**that** at least one threshold provided in a criterion for information output and/or a driving intervention is adapted according to the location information, in particular an orientation to a boundary of the driving route.

10. Method according to claim 8 or 9,
**characterised in**
**that** as part of the situation analysis a crossing of the boundary of the driving route is evaluated by a future trajectory (18) of the motor vehicle (2).

11. Motor vehicle (2) with a control device (7) designed for performing a method according to any of the preceding claims.

## Revendications

1. Procédé pour la détermination d'une information de localisation, comprenant une position et/ou une orientation, d'une automobile (1) concernant un couloir de circulation disponible dans une direction de circulation de l'automobile (1), dans lequel les données de radar décrivant l'environnement de l'automobile (1) sont enregistrées avec au moins un détecteur de radar (2), au moins une caractéristique immobile décrivant la limitation du couloir de circulation est identifiée dans les données de radar et localisée et est analysée pour la détermination d'une information de couloir de circulation décrivant le couloir de circulation dans un système de coordonnées d'automobile, dans lequel l'information de localisation est déduite à partir de l'information de couloir de circulation et dans lequel, en tant que caractéristique, une limitation de voie de circulation de la voie de circulation (16, 20) actuellement parcourue par l'automobile (1) et/ou une caractéristique indiquant l'emplacement de la limitation de voie de circulation sont identifiées et localisées, dans lequel en tant que couloir de circulation une chaussée est déterminée en tant que couloir de circulation,
**caractérisé en ce que**
en tant que l'au moins un détecteur de radar (2), un détecteur de radar (2) comprenant une puce à semi-conducteurs (10) réalisant l'émetteur-récepteur de radar (13), en particulier une puce CMOS, est utilisé et, en tant que caractéristique montrant et/ou décrivant une limitation de voie de circulation, une transition de matériaux (17) est utilisée du revêtement de chaussée à un autre sol qui est identifié par analyse du comportement de réflexion du rayon de radar.

2. Procédé selon la revendication 1,
**caractérisé en ce que**
au moins l'une de l'au moins une caractéristique est classée.

3. Procédé selon la revendication 1 ou 2,
**caractérisé en ce que**
en tant que caractéristique indiquant et/ou décrivant une limitation de voie de circulation, une bordure (21) et/ou une glissière de sécurité (22) sont en outre utilisées.

4. Procédé selon l'une quelconque des revendications précédentes,
**caractérisé en ce que**
pour la détermination de l'information de couloir de circulation, au moins une interpolation et/ou une extrapolation concernant les caractéristiques indiquant une limitation du couloir de circulation sont effectuées et/ou au moins une information supplémentaire déterminée à partir de données de détecteur d'autres détecteurs et/ou mise à disposition par un autre système d'automobile, en particulier un système de navigation, est prise en compte lors de la détermination de l'information de couloir de circulation.

5. Procédé selon l'une quelconque des revendications précédentes,
**caractérisé en ce que**
plusieurs détecteurs de radar (2) couvrant en particulier l'ensemble de l'environnement de l'automobile (1) dans une plage angulaire de 360 ° sont utilisés.

6. Procédé selon l'une quelconque des revendications précédentes,
**caractérisé en ce que**
également un composant de traitement de signal numérique (14) du détecteur de radar (2) et/ou une unité de commande (15) du détecteur de radar (2) sont réalisés par le biais de la puce à semi-conducteurs (10) et/ou la puce à semi-conducteurs (10) et un agencement d'antenne (11) du détecteur de radar (2) forment un package (12).

7. Procédé selon l'une quelconque des revendications précédentes,
**caractérisé en ce que**
le détecteur de radar (2) est exploité dans une plage de fréquences de 77 à 81 GHz et/ou avec une largeur de bandes de fréquence supérieure à 2 GHz, en particulier de 4 GHz.

8. Procédé selon l'une quelconque des revendications précédentes,
**caractérisé en ce que**
l'information de localisation est prise en compte dans le cadre d'au moins une analyse de situation associée à une fonction d'un système de sécurité et/ou d'un système d'assistance au conducteur.

9. Procédé selon la revendication 8,
**caractérisé en ce que**
au moins une valeur de seuil prévue dans un critère pour une délivrance d'information et/ou une opération de circulation est adaptée en fonction de l'information de localisation, en particulier d'une orientation par rapport à une limitation du couloir de circulation.

10. Procédé selon la revendication 8 ou 9,
**caractérisé en ce que**
dans le cadre de l'analyse de situation, une coupure de la limitation du couloir de circulation est analysée par le biais d'une trajectoire future (18) de l'automobile (2).

11. Automobile (2) avec un appareil de commande (7) réalisé pour l'exécution d'un procédé selon l'une quelconque des revendications précédentes.
